# EUROPEAN PATENT SPECIFICATION

(11) **EP 2 324 700 B1**
(45) Date of publication and mention of the grant of the patent: **26.09.2012**
(21) Application number: 10190956.2
(22) Date of filing: 12.11.2010
(51) Int. Cl.: A01G 17/06

(54) **Elastic compensation device particularly for plant row wires**
Elastisch ausgeglichener Drahtspanner, insbesondere für Drähte von Pflanzenreihen
Tendeur à fil à compensation élastique notamment pour des fils des plantes rangées.

(30) Priority: 23.11.2009 IT PN20090071
(43) Date of publication of application: 25.05.2011
(73) Proprietor: Bortolussi, Claudio, 33080 Fiume Veneto (PN) (IT)
(72) Inventor: Bortolussi, Claudio, 33080 Fiume Veneto (PN) (IT)
(74) Representative: Petruccelli, Davide

(56) References cited:
- EP-A1- 1 230 839
- WO-A2-2005/048691
- CH-A5- 685 187
- US-A- 4 040 604
- US-A- 4 433 831

## Description

The present invention regards an elastic compensation device capable of being used in the field of viticulture, and particularly, for compensating the movement of wires provided in a row of plants for the management and organisation of the vegetation.

In agriculture, and particularly in the field of viticulture it is known to provide plant support structures formed by rows of poles driven into the ground so as to form rows of plants. The poles are spaced from each other and they are interconnected in the part thereof projecting from the ground by a horizontal wire, called "support wire", which is fixed on said poles at a suitable height from the ground surface. At least one pair of wires, parallel to each other and arranged on respective sides of each pole of the row of plants, is fastened on the two poles positioned at the ends of each row of plants, called "head poles". These wires are commonly referred to as "containment wires" or "movable wires", because they are moved to different heights from the ground to restrain and guide the growing plants according to a desired configuration during the various stages of growing plants. Actually, during winter, when the vine shoots are very short or entirely absent, the pairs of movable wires are positioned close to the ground. During spring and summer, when the plants produce a more and more blooming vegetation, each pair of movable wires is positioned progressively further from the ground orthogonally with respect to the ground, containing the vegetation between the wires of each pair, thus guiding the growth thereof according to the desired configuration.

According to a first known arrangement, at least one of the ends of the movable wires used to be fixed to a head pole of the row of plants using metal chains provided with a suitable hooking element or suitable clamps, which were used for fastening a ring of the chain to the pole. When moving each movable wire, such fastening solution first requires loosening the wire, decoupling the respective chain from the pole, then repositioning the movable wire at the desired height and lastly re-coupling the chain to the pole. Being quite complex and tiresome, all these operations require at least two people, one for holding the chain keeping the movable wire tensioned and at least another person for moving the movable wire to a new position. It is thus clear, especially considering that there can be numerous rows of plants of considerable length on a cultivated surface, that such configuration for fastening the movable wires to a head pole of a row of plants requires a considerable physical effort and relatively long intervention times with considerable costs.

A further arrangement of known type which overcomes the drawbacks of fastening by means of a chain, is disclosed in CH-A-685187. According to the embodiment shown in this document, a traction helical spring is interposed between at least one of the ends of the movable wires and the respective head pole to which the wires are fastened. Such solution entails considerable drawbacks because the maximum capacity of the traction spring should be, for obvious reasons, considerably lower than that used for the controlling the movable wire. Hence, in case of high random loads occurring even over extremely short periods of time such as those caused by the wind force ("sail" effect) or by forces due to mechanical operations or forces deriving from random impacts produced involuntarily by erroneous manoeuvres of machines for automated treatment of the plants, there occurs the yielding i.e. permanent deformation of the abovementioned spring which must thus be replaced. Maintenance operations to replace damaged springs are thus disadvantageously costly, both in terms of financial resources used and in terms of the extraordinary maintenance operations regarding row of plants.

International Patent Application WO 2005/048691 discloses an elastic compensation device which can be used for conferring proper elasticity to movable wires used in structures for forming rows of vine plants. Such device is substantially constituted by a compression elastic element to which an element adapted to produce the tensioning of the movable wires to which the device is applied can be associated, and a pair of coupling elements respectively provided for fastening the device to a pole of a row of plants and for supporting said tensioning element. The latter element is constituted by an oblong body, rotatable about the longitudinal axis thereof, on which the movable wires can be wound.

The device disclosed in WO 2005/048691 provides that the entire device be arranged between the head pole of a row of plants and the region for coupling the movable wires to the device. In other words, on a first end region of the device, it is provided a first fastening means for fastening the device to a pole and a second fastening means on which one or more movable wires can be fixed to the device is provided in a second end region thereof, opposite to the first end region. Thus, any movement of a movable wire leads to a compression of the elastic element and a substantial increase of the space between the first region for fastening the device to the pole and the second end region in which the movable wires are fastened. The increase of such space can disadvantageously lead to the interference of the device with the vegetation produced by the first plant positioned adjacent to the head pole of the row of plants.

Another disadvantage of the compensation device disclosed in WO 2005/048691 consists in the low capacity of the device to receive wire tensioning devices different from a winding element. The slots provided on one of the two coupling elements of the device are scarcely capable of receiving a tensioning element that is not substantially cylindrical shaped, suitable to be arranged transverse with respect to the main extension of the compensation device. This allows the tensioning of the movable wires to be carried out only through a difficult work of winding the wires on the tensioning elements.

A further disadvantage of the compensation device disclosed in WO 2005/048691 consists in the fact that the annular element for fastening the device to a pole is scarcely adaptable to poles having a shape and/or size different from those of the annular fastening element. As known, the poles for rows of plants can have sections with large variety of shapes and often, in the same row of plants in which a damaged pole has been replaced, there can be poles of different type and shape. Since it cannot be fastened on a wide range of poles due to the restrictive shape of the annular element, the device disclosed in WO 2005/048691, entails a considerable disadvantage for the producers of the device, who substantially should provide a fastening element shaped specifically for each pole available in the market with ensuing need for frequent variations of the machinery work settings, increase of the storage spaces and a costly management thereof.

Thus, the aim of the present invention is to provide an elastic compensation device for wires, particularly for movable wires used for supporting vine shoots or plant branches, capable of overcoming the drawbacks and disadvantages of known devices.

Within the previously described aim an object of the present invention is to provide an elastic compensation device for wires that is simple and quick to install on a pole of a row of plants, the device being capable of receiving a tensioning means that is economical, easy to use and quick to install on the compensation device.

Another object of the present invention is to provide an elastic compensation device for wires which can be mounted on any type of pole for rows of plants regardless of the shape and size of the pole cross-section.

Another object of the present invention is to provide an elastic compensation device for wires whose overall dimension in the main direction of extension remains unaltered under any condition of operation of the device.

Last but not least, the object of the present invention is to provide an elastic compensation device for wires, particularly for movable wires used for supporting vine shoots or plant branches capable of receiving different types of elements adapted to tension said wires.

The previously described aim and objects are reached by an elastic compensation device having the characteristics outlined in the attached claims. Characteristics and advantages of the invention shall be clear from following exemplifying and non-limiting description, with reference to the attached drawings, wherein;
- Figure 1 schematically shows the application of the elastic compensation device according to the invention in a row of plants;
- Figure 2 shows a perspective view of an elastic compensation device for wires embodied according to the present invention;
- Figure 3 shows a perspective view of the device of figure 1 disassembled and a possible interconnection means for fastening said device to a pole of a row of plants;
- Figures 4A and 4B respectively show a variant embodiment of a second fastening element for fastening the movable wires of a row of plants to an elastic compensation device according to the invention and a variant embodiment of a first fastening element for fastening said device to a pole of a row of plants.
- Figure 5 is a longitudinal cross-sectional view of a tensioning means applicable to an elastic compensation device according to the invention;

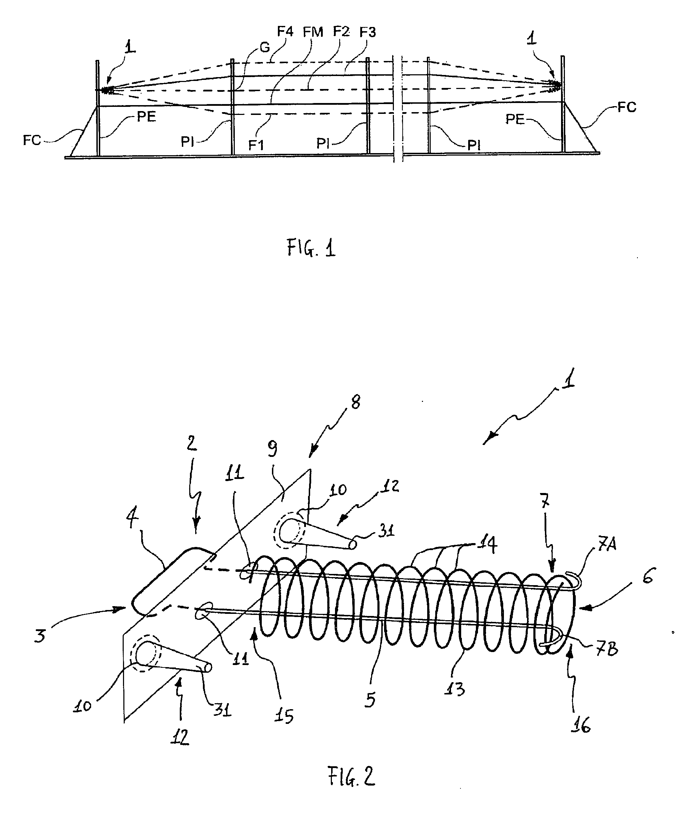

In figure 1 it is shown the application of the elastic compensation device according to the present invention to a row of plants. The latter is made up of a plurality of poles arranged aligned and spaced from each other. The poles, as known, may be constituted by suitable elements made of wood, cement or even metal having variously shaped cross-sections and often provided with elements and/or devices for coupling wires thereto. The poles at the ends of the row of plants, called "head poles" are indicated with reference PE and the intermediate ones with reference Pl. A fixed wire FM called "support wire" is fastened at a suitable height from the ground on all poles PE and PI; furthermore the head poles are suitably wind braced using suitable wind bracing wires indicated with reference FC. Elastic compensation devices 1 are also provided on the two head poles PE placed at a suitable distance from the ground; in the example illustrated in figure 1 the elastic compensation devices 1 are arranged at a higher position with respect to that of fastening the support wire FM. A pair of movable wires F which are arranged on both sides of the intermediate poles PI is associated to each elastic compensation device 1. Due to the elasticity of the compensation devices 1 the movable wires F can be fastened through simple operations for coupling to suitable hooking elements G obtained or applied on the respective intermediate poles Pl so as to be positioned at different heights from the ground. A numerical symbol was added to the common reference F to mark the various possible positions of the movable wires F; furthermore the position of the wire F3 alone is indicated with a solid line while the others, and precisely the positions of the two lower movable wires and that of the wire above the wire F3, are indicated with dashed lines and respectively with references con F1, F2 and F4.

The application of two elastic compensation devices 1 to the respective two ends of the pair of movable wires F is indicated in the embodiment of an elastic compensation device 1 provided according to the present invention and illustrated in figure 1. However, it is clear that, particularly in the case of short rows of plants and still according to the functional characteristics of the compensation devices 1, only one device 1, may be used by applying it to only one end of the pair of wires F.

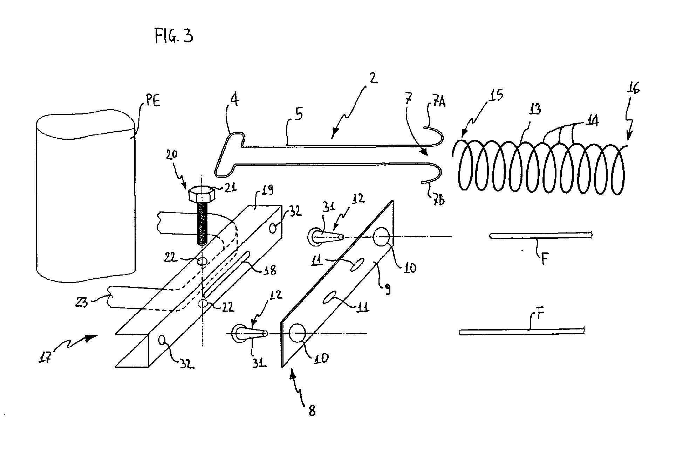

An elastic compensation device 1 for wires F provided according to the present invention shall now be described with reference to figures 2 and 3. The device 1 comprises a first fastening element 2 suitable for fastening the device 1 to a head pole PE of a row of plants. The fastening element 2 comprises a first end 3 provided with a slotted body 4 from which a projecting portion 5 defining a second end 6 of the fastening element 2 opposite to the first end 3 departs. The second end 6 is provided with a coupling body 7 comprising two opposite hooks 7A and 7B. Advantageously, the first fastening element 2 is provided forming a single piece of wire of suitable cross-section, so that the two ends of said piece of wire are folded to form two hooks 7A and 7B, while the median region of the piece is shaped to form a slot 4 and the remaining two portions comprised between the two hooks 7A, 7B and the slot 4 extend in a substantially parallel and rectilinear manner to form the projecting portion 5.

A second fastening element 8, preferably in form of a plate 9, is provided for receiving one or more pairs of movable wires F of a row of plants. The second fastening element 8 is arranged transversely with respect to the main extension of the first fastening element 2 and it is also slidably mounted on the first fastening element 2 by means of one or more through openings 11 through which the projecting portion 5 of the first fastening element 2 extends. The projecting portion 5 and said at least one opening 11 constitute a guide means for the sliding of the second fastening element 8 with respect to the first fastening element 2.

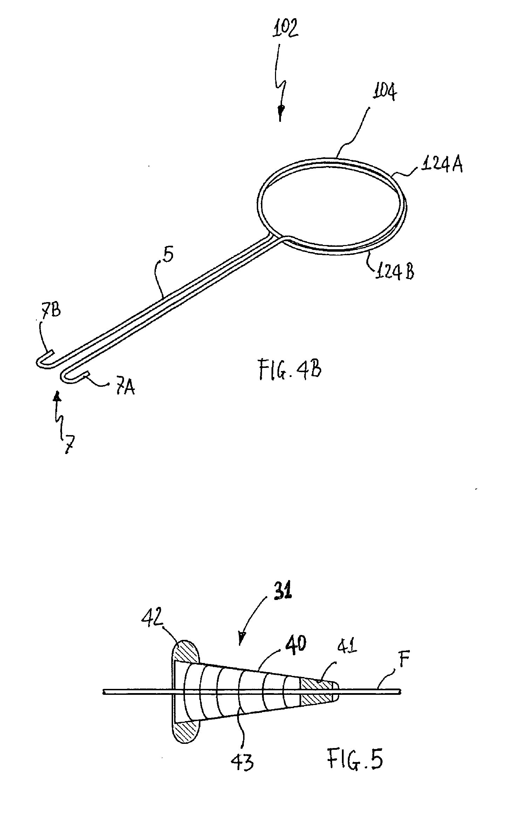

In the embodiment illustrated in figures 2 and 3, the movable wires F are associated to the second fastening element 8 through tensioning means 12 adapted to cause a tension force in each of the wires F. In figures 2 and 3, the tensioning means 12 are constituted by locking elements 31. A longitudinal cross-sectional view of one of said locking elements 31 is shown in figure 5. The locking element 31 is preferably made of metal material and it has a body 40 advantageously constituted by a hollow element and having a tapered external surface, and by a "doughnut-shaped" head 42, fastened to the body 40 for example by welding and slightly projecting radially therefrom.

The body 40 comprises at least one cross-section whose shape is conjugated with that of each through opening 10 formed on the second fastening element 8, so that the body 40 can be removably fastened with interference within the opening 10.

Retention means 41, such as for example wedge-shaped elements, projecting from the inner edges of the body 40 towards the centre of the cavity, closing it partly, are provided within the tapered body 40, in proximity of the opening of the narrowest end thereof. Said retention means 41 are associated to an end of a biasing element 43 constituted by a compression spring which, at the other end, abuts against the inner surface of the head 42. The particular internal configuration of the locking element 31 allows the passage of a wire F in the direction extending from the narrowest point of the body 40, passing thorough the retention means 41 and the coils of the spring 43, to the side of the head 42.

The pressure exerted by the wire F at the inlet of the body 40 between the retention means 41 causes the compression of the spring 43 associated thereto and thus allows the insertion of the wire F within the locking element 31.

Once the pressure exerted by the force for inserting the wire F into the locking element 31 ceases, i.e. upon reaching the desired tensioning degree of the wire F, the contrast spring 43 pushes the retention means 41 towards the rest position thereof thus allowing wedging thereof between the internal surface of the body 40 and the wire F preventing the latter from slipping off. In other words, the locking element 31 is internally configured to allow the passage of a wire F therein solely in one direction, preventing, through suitable retention means 41, the possibility that the wire slips off sliding in the opposite direction.

The external configuration of the locking element 31 is such to allow coupling within one of the through openings 10 of the second fastening element 8 due to the tapering of the body 40. Should the tension applied on the wire F be high, the head 42 of the locking element 31 can abut against the surface of the second fastening element 8 thus firmly fastening the wire F to the elastic compensation device 1.

The elastic compensation effect of the device 1 provided according to the invention is conferred by a suitable elastic element 13 comprising a spiral spring whose coils 14 are suitably spaced to allow the compression operation of the elastic element 13. The elastic element 13 comprises a first and a second end region, indicated with references 15 and 16 respectively. The elastic element 13 is mounted on the first fastening element 2 such that the coils 14 extend around the projecting portion 5 and that the means 4 for fastening the device 1 on the pole PE as well as the second element 8 for fastening of the wires F to compensation device 1 are both arranged in proximity of the first end region 15 of the elastic element 13, i.e. adjacent to the end region of the latter. The elastic element 13 is also arranged between the two tensioning means 12 on which the movable wires F are fastened. The projecting portion 5 of the first fastening element 2 is associated to the elastic element 13 through the coupling body 7 on the second end region 16 of the elastic element 13, opposite to that in which the fastening means 4 and the second fastening element 8 are arranged.

According to the previously described configuration, and with reference to an elastic compensation device 1 installed in a row of plants as represented in figure 1, when the wires F are moved vertically with respect to the ground, i.e. when moved from the position F2 parallel to the ground to one of the positions F1, F3, F4, the wires F associated to the second fastening element 8 exert a traction on the latter. Such traction force causes a movement of the second fastening element 8 from the first end 3 of the first fastening element 2 towards the second end 6 thereof, sliding along the projecting portion 5 of the first fastening element 2. The elastic element 13, which is constrained between the second fastening element 8 and the coupling body 7 of the first fastening element 2, shall be pressed only in the compression direction due to the traction force exerted by the wires F on the second fastening element 8.

As easily evincible, due to the configuration of the elastic compensation device 1 described previously, the overall dimension of said device 1 in the extension direction of the row of plants remains constant under any condition of operation of the device 1, i.e. for any position of the wires F. Particularly, the overall dimension of the elastic compensation device 1 shall be equivalent to the length of the first fastening element 2 comprised between the ends 3, 6 thereof, unless in case of flexion of the first fastening element 2 which even causes the shortening of the overall length of the compensation device 1 with respect to the length measurable in condition of absence of flexural forces (movable wire F parallel to the ground).

An interconnection device 17, which is not part of the elastic compensation device 1 subject of the present invention, but which helps understanding how the compensation device 1 can be applied to a pole PE of a row of plants is also shown in figure 3. The interconnection device 17 cooperates with the slotted body 4 of the first fastening element 2 receiving said body 4 within a through opening 18 formed on a support 19 constituted by a section preferably having a U-shaped cross-section. The support 19 is further provided with a pin locking means 20, preferably comprising a screw 21, which extends through a pair of through holes 22 whose common axis is substantially orthogonal to the plane containing the slotted body 4. The pin locking means 20 is received in the slot formed by the slotted body 4 and it is fixed in the through holes 22 possibly by means of a suitable thread. The slotted body 4 is thus removably associated with the support 19. A binding element 23, such as for example a metal strip, is provided on the interconnection device 17 for connecting the support 19 to the pole PE. The binding element 23 shall be received between the opening 18 formed on the support 19 and the axis of the holes 22, such that the pin locking means 20 housed in said holes 22 is interposed between the binding element 23 and the pole PE. Seats 32 used for receiving part of the movable wire F which possibly projects from the tensioning means 12 can be provided on the support 19.

A variant embodiment of a first element 102 for fastening the elastic compensation device 1 according to the invention is shown in figure 4B. It should be observed that in the variant embodiment, the construction features that remain unaltered with respect to the embodiment shown in figures 2 and 3 were indicated using the same reference numbers. The fastening element 102 comprises a slotted body 104 which can possibly have the size and shape suitable to receive - therein - a pole PE having a substantially circular cross section. Thus, the elastic compensation device 1 can be provided to be associated with a pole PE of a row of plants both by means of an interconnection device 17 (figure 3) and directly, i.e. enabling the pole PE to be received in the slotted body 104. As described with reference to the first coupling element 2, also the variant embodiment 102 shall be constituted by a piece of wire which - in this variant - is wound centrally so as to form two coils 124A, 124B having a diameter adapted to allow the application of the fastening element 102 and of the entire elastic compensation device 1 on a pole PE of a relative row of plants. The wire is folded radially outside so as to form a projecting portion 5 constituted by two pieces of wire extending in a manner substantially parallel and rectilinear at the ends of the two coils 124A, 124B. Each of the two ends of the piece of wire is folded to form a coupling body 7 comprising two opposite hooks 7A and 7B.

Obviously, the configuration of the slotted body 104 shall be the most suitable one depending on the shape of the cross-section of the pole PE to which it can be provided for that the slotted body 104 be possibly associated omitting the use of the interconnection device 17 (figure 3).

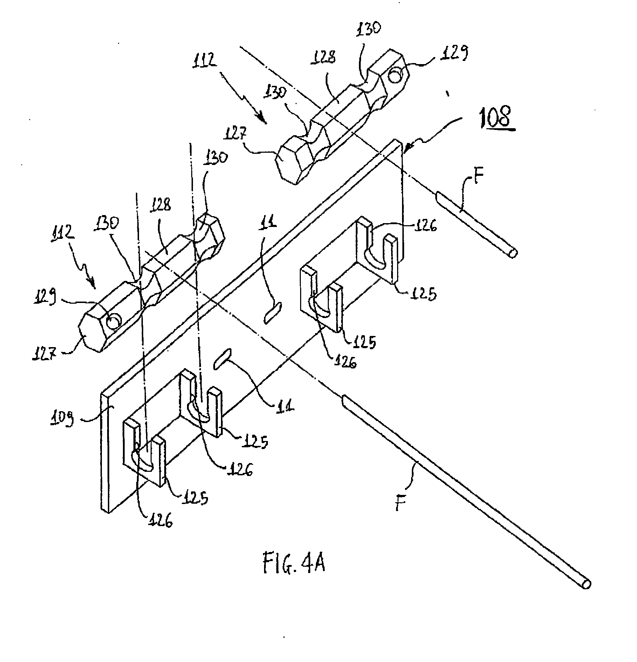

A variant embodiment of the second fastening element 108 of the elastic compensation device 1 according to the invention is illustrated in figure 4A. It should be observed that in the embodiment, the construction characteristics that remain unaltered with respect to the embodiment shown in figures 2 and 3 were indicated using the same reference numbers. In this variant embodiment, the second fastening element 108 comprises a plate 109 provided with a plurality of supports 125 each comprising a seat 126 within which suitably shaped portions 130 of the means 112 for tensioning the movable wires F, so as to be arranged at opposite sides with respect to the elastic element 13, are rotatably housed. In this embodiment, the tensioning means 112 comprise a pair of winding means 127 provided with a surface 128 which can deform the movable wires F thus causing the winding thereof around the surface 128, hence allowing an extremely fine adjustment of the tension caused in the wire F. As illustrated in figure 4A the winding surface 128 can consist in the lateral surface of a prism having a hexagonal-shaped cross-section or, a cross-section of any other polygonal shape, adapted to be coupled by a suitable lever arm, such as for example a box spanner. A hole 129 is also provided on the surface 128 for the insertion of stop means of the known type, such as for example a hook, not represented in figure 4A, useful for stopping the rotation of the winding means 127 at a given position after the wire F is wound around the surface 128. The same supports 125 can also be used for fastening the stop means onto the elastic compensation device 1.

The supports 125 can be advantageously obtained by providing cuts in the plate 109 and folding the material portions delimited by the cutting lines raising them from the plane containing the plate 109. Openings 11 for housing the projecting portion of the first fastening element 2, 102 of the compensation device 1 according to the invention are also formed in the plate 109. Obviously, if desired, the openings 11 formed on the plates 9, 109 can be replaced by a single through slot.

Now, with reference to a row of plants provided with a pair of elastic compensation devices 1 formed according to the invention, as illustrated in figure 1, in order to facilitate the adaptation of the position of the compensation device 1 when each movable wire F is moved, particularly when a movement is imparted to each wire F in a direction orthogonal to the ground which is converted into a rotation of the wire F around the head pole PE, the elastic element 13 of the elastic compensation device 1 and each wire F associated with said device 1 are advantageously left free to move independently with respect to each other. In other words, when the position of the movable wires F is raised or lowered with respect to the position parallel to the ground F2, as indicated in figure 1 with references F1, F3, F4, in each compensation device 1 the first fastening element 2, 102 and the relative projecting portion 5 are stressed by a flexural load which causes a rotation thereof in the same direction towards which the wires F rotate with respect to the head pole PE. The simultaneous compression force generated in the elastic element 13 by the movement of the wires F can however be such to cause a further flexural load in the projecting portion 5, not necessarily in the same rotational direction due to the movement of the wire F, which can even exceed that caused by the rotation of the wire F thus causing an ensuing rotation or bending of the elastic element 13 and the first fastening element 2 in the rotational direction opposite to that imparted by an operator intervening on the wires F of the row of plants. In order to avoid damaging the elastic compensation device 1, the elastic element 13 and the movable wires F associated to the device 1 by means of the second fastening element 8, 108 are movable independently with respect to each other, in particular, the second ends 6, 16, respectively of the first fastening element 2, 102 and of the elastic element 13, are mutually associated but entirely decoupled from each movable wire F, and thus they are movable independently from the movement to which the wire F is subjected. Thus, such configuration allows said wire F and the elastic element 13 to rotate independently from each other with respect to the pole PE to which the elastic compensation device 1 is fastened.

The independent movement of the movable wires F with respect to the elastic element 13 is also facilitated by the clearance present in the guide means of the second fastening element 8, 108, i.e. by the clearance present between the openings 11 and the projecting portion 5 of the first fastening element 2. Such clearance allows the second fastening element 8, 108 to rotate around an axis transverse to the direction of extension of the projecting portion 5 and passing through the openings 11, i.e. a rotation with respect to the first fastening element 2, 102 and, hence, with respect to the elastic element 13 mounted on the latter. Thus, subjected to a flexural load, each wire F and the elastic element 13 move substantially perpendicularly with respect to the ground, independently from each other.

It has thus been observed that the invention reached the preset aims and objectives, given that an elastic compensation device for wires, particularly for movable wires used for supporting vine shoots or plant branches, which is advantageously simple and quick to install on a pole of a row of plants has been provided, said pole having a cross-section of any shape and size. The device according to the invention also allows installing tensioning means which are possibly available in the market at low cost, easy to use and quick to install on the compensation device.

A further advantage of a device provided according to the invention lies in that the overall dimension thereof does not change upon variation of the position of the movable wires with respect to the ground, thus the vegetation of the plants adjacent to the head pole of the row of plants is kept from any interaction with the compensation device. It has also been observed that the compensation device according to the invention is advantageously versatile since it can be associated with different types of elements adapted to cause tension in the movable wires provided for supporting vine shoots or plant branches.

The embodiments of an elastic compensation device according to the present invention are not limited to those shown in the attached drawings in any manner whatsoever but they may consist in various embodiments, all falling within the attached claims. Furthermore, the materials as well as the dimensions constituting the single components of the invention can be the most suitable depending on the specific needs.

## Claims

1. Elastic compensation device (1) for wires, in particular for movable wires used for supporting vine-shoots or branches in a row of plants, comprising a first fastening element (2, 102) provided with fastening means (4, 104) suitable for fastening said device (1) to a pole (PE) in a row of plants, a second fastening element (8, 108) suitable to receive at least one pair of movable wires (F), and an elastic element (13) comprising a first and a second end region (15, 16), **characterized in that** said fastening means (4, 104) and said second fastening element (8, 108) are arranged in proximity of the same end region (15) of said elastic element (13) so as to urge the latter only in a compressive direction.

2. Elastic compensation device (1) according to claim 1, wherein said first fastening element (2, 102) comprises a projecting portion (5) associated with the second end region (16) of the elastic element (13) and wherein said elastic element (13) comprises a helical spring provided with coils (14) extending around said projecting portion (5).

3. Elastic compensation device (1) according to claim 1 or 2, wherein said second fastening element (8, 108) comprises a movable plate (9, 109) provided with at least one through opening (11) through which extends a projecting portion (5) of the first fastening element (2, 102), said at least one opening (11) and said projecting portion (5) forming guide means for the movement of said plate (9, 109).

4. Elastic compensation device (1) according to any one of the previous claims, wherein said second fastening element (8, 108) is associated with tensioning means (12, 112) suitable to induce a tension in each wire (F) of said at least one pair of movable wires (F), said tensioning means (12, 112) being placed in opposite positions with respect to the elastic element (13).

5. Elastic compensation device (1) according to claim 4, wherein said tensioning means (12) comprise a locking element (31) within which a movable wire (F) is slidably associable, said locking element (31) being configured to allow the sliding of said movable wire (F) in a first direction and to prevent said sliding in a second direction opposite to said first direction.

6. Elastic compensation device (1) according to claim 4, wherein said tensioning means (112) comprise winding means (127) provided with a surface (128) suitable to deform said movable wires (F) causing them to be wound around it.

7. Elastic compensation device (1) according to any one of the previous claims, in which said first fastening element (2, 102) comprises a first end (5) provided with a slotted body (4, 104) and a second end (6), opposite to said first end, provided with a coupling body (7).

8. Elastic compensation device (1) according to any one of the previous claims, wherein said first fastening element (2, 102) and said elastic element (13) are formed by bending a wire.

9. Elastic compensation device (1) according to any one of the previous claims, wherein said second end region (16) of the elastic element (13) is independently movable with respect to each wire (F) of said pair of wires (F).

## Patentansprüche

1. Elastische Ausgleichsvorrichtung (1) für Drähte, insbesondere für bewegliche Drähte, die zum Halten von Weinreben oder von Zweigen in einer Reihe von Pflanzen verwendet werden, umfassend ein erstes Befestigungselement (2, 102), das mit Befestigungsmitteln (4, 104) versehen ist, die zum Befestigen der Vorrichtung (1) an einem Pol (PE) in einer Reihe von Pflanzen geeignet sind, ein zweites Befestigungselement (8, 108), das zum Aufnehmen wenigstens eines Paares von beweglichen Drähten (F) geeignet ist, und ein elastisches Element (13), das einen ersten und einen zweiten Endbereich (15, 16) umfasst, **dadurch gekennzeichnet, dass** die Befestigungsmittel (4, 104) und das zweite Befestigungselement (8, 108) in der Nähe desselben Endbereiches (15) des elastischen Elementes (13) angeordnet sind, um letzteres nur in Kompressionsrichtung zu drücken.

2. Elastische Ausgleichsvorrichtung (1) nach Anspruch 1, wobei das erste Befestigungselement (2, 102) einen Vorsprungsabschnitt (5) umfasst, der dem zweiten Endbereich (16) des elastischen Elementes (13) zugeordnet ist, und wobei das elastische Element (13) eine schraubenförmige Feder umfasst, die mit Windungen (14) versehen ist, die sich um den Vorsprungsabschnitt (5) herum erstrecken.

3. Elastische Ausgleichsvorrichtung (1) nach Anspruch 1 oder 2, wobei das zweite Befestigungselement (8, 108) eine bewegliche Platte (9, 109) umfasst, die mit wenigstens einer Durchgangsöffnung (11) versehen ist, durch die sich ein Vorsprungsabschnitt (5) des ersten Befestigungselementes (2, 102) erstreckt, wobei die wenigstens eine Öffnung (11) und der Vorsprungsabschnitt (5) Führungsmittel für die Bewegung der Platte (9, 109) bilden.

4. Elastische Ausgleichsvorrichtung (1) nach einem der vorherigen Ansprüche, wobei das zweite Befestigungselement (8, 108) Spannmitteln (12, 112) zugeordnet ist, die zum Einleiten einer Spannung in jeden Draht (F) des wenigstens einen Paares von beweglichen Drähten (F) geeignet sind, wobei die Spannmittel (12, 112) in entgegengesetzten Positionen in Bezug auf das elastische Element (13) platziert sind.

5. Elastische Ausgleichsvorrichtung (1) nach Anspruch 4, wobei die Spannmittel (12) ein Sperrelement (31) umfassen, dessen Innerem ein beweglicher Draht (F) gleitverschieblich zuordenbar ist, wobei das Sperrelement (31) dafür ausgelegt ist, das Gleitverschieben des beweglichen Drahtes (F) in einer ersten Richtung zu ermöglichen und das Gleitverschieben in einer zu der ersten Richtung entgegengesetzten zweiten Richtung zu verhindern.

6. Elastische Ausgleichsvorrichtung (1) nach Anspruch 4, wobei die Spannmittel (112) Wickelmittel (127) umfassen, die mit einer Oberfläche (128) versehen sind, die zum Verformen der beweglichen Drähte (F) geeignet sind, um zu bewirken, dass diese um sie herum gewickelt werden.

7. Elastische Ausgleichsvorrichtung (1) nach einem der vorherigen Ansprüche, bei der das erste Befestigungselement (2, 102) ein erstes Ende (5), das mit einem Schlitzkörper (4, 104) versehen ist, und ein zu dem ersten Ende entgegengesetztes zweites Ende (6), das mit einem Kopplungskörper (7) versehen ist, umfasst.

8. Elastische Ausgleichsvorrichtung (1) nach einem der vorherigen Ansprüche, wobei das erste Befestigungselement (2, 102) und das elastische Element (13) durch Biegen eines Drahtes gebildet sind.

9. Elastische Ausgleichsvorrichtung (1) nach einem der vorherigen Ansprüche, wobei der zweite Endbereich (16) des elastischen Elementes (13) in Bezug auf jeden Draht (F) des Paares von Drähten (F) unabhängig beweglich ist.

## Revendications

1. Dispositif de compensation élastique pour câble, en particulier pour des câbles mobiles utilisés pour supporter des sarments de vigne ou des branches dans une rangée de plantes, comprenant une premier élément d'attache (2, 102) pourvu de moyens de fixation (4, 104) adaptés pour fixer ledit dispositif (1) à un piquet 5 (PE) dans une rangée de plantes, un second élément de fixation (8, 108) adapté pour recevoir au moins une paire de câbles mobiles (F), et un élément élastique (13) comprenant une première et une seconde zone d'extrémité (15, 16), **caractérisé en ce que** lesdits moyens de fixation (4, 104) et ledit second élément de fixation (8, 108) sont disposés à proximité d'une méme zone d'extrémité (15) dudit élément élastique (13) afin de pousser ce dernier uniquement dans une direction de compression.

2. Dispositif de compensation élastique (1) selon la revendication 1, dans lequel ledit premier élément de fixation (2, 102) comprend une partie en saillie (5) associée avec la seconde zone d'extrémité (16) de l'élément élastique (13) et dans lequel ledit élément élastique (13) comprend un ressort hélicoïdal pourvu de spires (14) s'étendant autour de ladite partie en saillie (5).

3. Dispositif de compensation élastique (1) selon les revendications 1 ou 2, dans lequel ledit second élément de fixation (8, 108) comprend une plaque mobile (9, 109) pourvue d'au moins une ouverture traversante (11) à travers laquelle s'étend une partie en saillie (5) du premier élément de fixation (2, 102), ladite au moins ouverture (11) et ladite partie en saillie (5) formant des moyens de guidage pour le déplacement de ladite plaque (9, 109).

4. Dispositif de compensation élastique (1) selon l'une quelconque des revendications précédentes, dans lequel ledit second élément de fixation (8, 108) est associé avec des moyens de tension (12, 112) adaptés pour induire une tension dans chaque câble (F) de ladite au moins une paire de câbles mobiles (F), lesdits moyens de tension (12, 112) étant disposés dans des positions opposées par rapport à l'élément élastique (13).

5. Dispositif de compensation élastique (1) selon la revendication 4, dans lequel lesdits moyens de tension (12) comprennent un élément de verrouillage (31) à l'intérieur duquel un câble mobile (F) peut être associé par coulissement, ledit élément de verrouillage (31) étant configuré pour permettre le coulissement dudit câble mobile (F) dans une première direction et pour empêcher ledit coulissement dans une seconde direction opposée à ladite première direction.

6. Dispositif de compensation élastique (1) selon la revendication 4, dans lequel les moyens de tension (112) comprennent des moyens d'enroulement (127) pourvus d'une surface (128) adaptée pour déformer lesdits câbles mobiles (F) en les forçant à s'enrouler autour d'elle.

7. Dispositif de compensation élastique (1) selon l'une quelconque des revendications précédentes, dans lequel ledit élément de fixation (2, 102) comprend une première extrémité (5) pourvue d'un corps à fentes (4, 104) et une seconde extrémité (6), opposée à ladite première extrémité, pourvue d'un corps de couplage (7).

8. Dispositif de compensation élastique (1) selon l'une quelconque des revendications précédentes, dans lequel ledit élément de fixation (2, 102) et ledit élément élastique (13) sont formés par pliage d'un câble.

9. Dispositif de compensation élastique (1) selon l'une quelconque des revendications précédentes, dans lequel ladite seconde zone d'extrémité (16) de l'élément élastique (13) est mobile indépendamment de chaque câble (F) de ladite paire de câble (F).
